# EUROPEAN PATENT SPECIFICATION

(11) **EP 3 785 001 B1**
(45) Date of publication and mention of the grant of the patent: **05.06.2024**
(21) Application number: 19718404.7
(22) Date of filing: 23.04.2019
(51) Int. Cl.: G01M 1/22, G01M 5/00, G01M 7/02, G01N 3/32

(54) **RESONANT FATIGUE TESTING**
RESONANZ-ERMÜDUNGSPRÜFUNG
ESSAI DE FATIGUE RÉSONNANT

(30) Priority: 24.04.2018 NL 2020815
(43) Date of publication of application: 03.03.2021
(73) Proprietor: Onderzoekscentrum voor Aanwending van Staal N.V., 9060 Zelzate (BE)
(72) Inventor: THIBAUX, Philippe Octave, 9060 Zelzate (BE); VAN WITTENBERGHE, Jeroen Stijn Juliaan, 9060 Zelzate (BE)
(74) Representative: EP&C
(86) International application number: PCT/EP2019/060331
(87) International publication number: WO 2019/206884

(56) References cited:
- EP-A1- 2 927 660
- US-A1- 2013 205 911

## Description

The present invention relates to a test rig for fatigue testing of a test specimen. The present invention further relates to a testing assembly for fatigue testing of a test specimen, to a method for fatigue testing of a test specimen and to a method for designing a fatigue test.

A combination of a test rig with a test specimen, as well as a method for the performing of a fatigue test, is known from WO 2014/161858 A1. In this prior art document, a test rig is disclosed which comprises two supports, on which a branched test specimen rests. The test rig further comprises an excitator, comprising a connector for connecting the excitator to one end of the test specimen.

The excitator comprises an excenter, which comprises a rotating eccentric mass that is configured to apply a rotating eccentric force on the specimen. The rotating eccentric force induces a forced vibration in the test specimen, which causes the test specimen to be subjected to fatigue stresses, which may ultimately occur in the formation of fatigue cracks.

The test rig from the prior art, however, has the disadvantage that the eccentric force is only applied on one end of the test specimen and that the opposing end of the test specimen acts as a free end. This has the result that the test specimen is not loaded symmetrically and that the fatigue stresses vary over the length of the specimen.

A further disadvantage lies in the fact that the applied eccentric force in the prior art test rig describes a circular path, which requires a special geometry of the test specimen. Hence, the test specimen has to be dimensioned such, that its in plane bending resonance frequency is substantially the same as the out of plane bending resonance frequency. These required dimensions for the test specimen limit the freedom of choosing a suitable specimen and may give the result that some specific specimen cannot be tested with the test rig, although it would be desired to do so.

EP 2 927 660 A1, cited document D1, discloses a device for stress testing rotary test specimens by oscillating forces of an oscillating system, which comprises two actuators for generating an vibration. A test specimen can be supported in a fixed position, such that the direction of the axis of rotation of the specimen is supported horizontally at opposite ends of the specimen. Both actuators comprise an eccentric mass that are rotated in the same direction to subject the specimen to eccentric forces.

US 2013/205911 A1, cited document D2, discloses an apparatus for testing reversal bending fatigue in an elongated beam. The apparatus is configured to be coupled to first and second end portions of the beam and to apply a bending moment to the beam so as to create a pure bending condition in an intermediate portion of the beam. The apparatus may further be configured to cyclically alternate the direction of the bending moment applied to the beam, such that the intermediate portion of the beam cyclically bends in opposite directions.

It is therefore an object of the invention to provide a test rig which lacks the above-mentioned disadvantages, or at least to provide an alternative test rig.

The present invention provides a test rig for fatigue testing of a test specimen as defined in claims 1 to 4, a testing assembly as defined in claims 5 and 6, and a method for fatigue testing of a test specimen as defined in claims 7-12.

In the test rig according to the present invention, the test specimen is configured to be arranged in between two opposing excitators of the test rig. The first excitator comprises the first connector, with which the first excitator may be connected to the first end of the test specimen. The second excitator is, with respect to the test specimen, arranged opposite to the first excitator and comprises a second connector, with which the second excitator may be connected to the second end of the test specimen.

Preferably, the connectors of the respective excitators are configured to be directly connected to the respective end of the test specimen, for example by means of an end-to-end connection or a bolted flange connection. This connection may provide for a rigid coupling between the test specimen and the connectors of the respective excitator, in order to substantially prevent the connector itself from being subjected to fatigue loads.

By providing an excitator on each side of the test specimen, both sides of the test specimen may be subjected to a forced vibratory load. This allows for a more even spreading of the forces and provides that the forces acting on the test specimen do no longer only need to describe a circular path.

Moreover, a combined vibratory load, which is the sum of the first forced vibratory load and the second forced vibratory load, may be achieved that can be optimally suited to mimic real-life load cases, instead of that the test specimen had to be specifically dimensioned for a certain fatigue test, not necessarily corresponding to real-life load cases.

The test specimen may, with the test rig according to the invention, furthermore be loaded more homogeneous around its circumference, in order to provide that hot spots governing fatigue failure are evenly distributed around the circumference of the test specimen. This homogenous loading gives the result that the stresses in the test specimen may be spread more equally around its circumference. For example with a tubular specimen, having a circular cross section, the stresses around the circular circumference are substantially equal.

This is in particular advantageous with welded joints in the specimen. The welds in these specimens generally extend around the entire circumference of the specimen. With the test rig according to the present invention, the weld may be subjected to substantially the same stresses around its entire length, whereas in the known test rig, the weld is generally not equally loaded along its length, or at least had to be specially adapted to be so, for example because stress concentration factors are not constant along the circumference of the weld.

The test rig with the first and the second excitator provides a further advantage that, during testing, the test specimen no longer has a free end that is not subjected to an externally-applied vibratory load. The amplitude of the applied vibration force at both ends of the test specimen may thus be the same, whereas the free end in the prior art used to have no force applied.

The lack of a free end furthermore provides that the test specimen does not need to be provided with a compensating mass at its free end. These compensating masses were needed in the prior art test rig, in order to compensate for the lower weight at the free end, compared to the increased weight at the side of the excitator, being for example induced by the connector of the excitator.

The test rig comprises the first excitator and the second excitator, which are both configured to apply a forced vibrational load on the test specimen. The vibrational load may for example be a circular, alternating load, e.g. having reversals in the direction of the load. The directions in which the first forced vibratory load are applied lie in a first plane, which is parallel to a second plane, in which the directions of the second forced vibratory load lie.

The test rig thus allows that at least a component of the first load is parallel to at least a component of the second load, whereas it is not required that these components are parallel at the same time, e.g. a phase shift may be present between the first load and the second load.

In an exemplary loading situation, the first load may for example be applied in a y-direction, whereas the second load is applied in a direction in between the y-direction and a perpendicular z-direction. This means that both the first load and the second load are applied in the y-z plane and that the second load at least has a component in the y-direction, being parallel to the direction of the first load.

Preferably, the first excitator and the second excitator are driven by a motor that is not rigidly connected to the connector, but which may be connected to a frame of the rig. The excitators may, for example, be connected to their respective motors by means of a cardan joint, which is configured to compensate for oscillating misalignments between the motor and the excitator, resulting from the vibrating excitators. In such a test rig, the motors do not vibrate along with the connectors and the test specimen, but remain still. This reduces the amount of vibrating mass and increases the Eigen frequency of the test specimen.

The reduced weight of the excitators furthermore reduces the amount of bending of the test specimen, under the influence of the static weight, and minimizes the influences of gravitational forces on the outcomes of the test results.

The first excitator and the second excitator are preferably configured to respectively apply the first forced vibratory load and the second forced vibratory load along a direction that intersects a centreline of the test specimen, radially projecting away from the centreline. This reduces the occurrence of torsion, which occur when a load is applied at a distance from the centreline, such that the load has moment arm with the centreline.

This loading through the centreline is in particular advantageous when the magnitude of the first forced vibratory load differs from the magnitude of the second forced vibratory load, because the similar loads cannot compensate torsion. In the embodiment of the test rig, in which the loads on the test specimen are applied through the centreline, torsion does not occur and do not need to be compensated.

In an embodiment of the test rig, the at least one support is configured to be located underneath the test specimen and the test specimen is configured to rest on the at least one support. Preferably, each of the at least one supports is configured to be located underneath a positon of the test specimen where a node of a deformed mode shape of the test specimen is to be located during the fatigue testing of the test specimen.

In a further embodiment, the test rig comprises a cushion for each of the at least one supports. The cushion is adapted to be arranged on the support and the test specimen is configured to rest on the cushion. For example, the cushion is an inflatable air cushion.

In an embodiment of the test rig, the first excitator and the second excitator each comprise an excenter. Each of the excenters comprises an eccentric mass, which is rotatable around an axis of rotation in order to generate an eccentric force. Each of the excenters is configured to transmit a respective eccentric force onto a respective end of the test specimen in order to subject the test specimen to the forced vibratory loads.

In a further embodiment, the first excitator comprises a first motor, which is configured to rotate the eccentric mass of the first excitator. The second excitator comprises a second motor, which is configured to rotate the eccentric mass of the second excitator. Each of the excitators thereby has its own individual motor and the first excitator and the second excitator do not share a common motor. This provides the advantage that the excenters of both excitators may be controlled individually e.g. by controlling their respective motor, which may allow for more realistic fatigue loads that are to be applied on the test specimen. Preferably, the first motor is a first electric motor and the second motor is a second electric motor.

In an embodiment, each of the excenters comprises a single eccentric mass. This implies that on both ends of the test specimen, only a single eccentric mass is present, which means that the test rig may be less complex and expensive, as compared to when a plurality of eccentric masses were to be provided in each of the excenters, but that it may still be able to subject the test specimen to the desired forced vibrating loads.

According to the claimed invention, an axis of rotation of the excenter of the first excitator is aligned concentrically with an axis of rotation of the excenter of the second excitator and wherein a longitudinal axis of the test specimen is adapted to be aligned concentrically with the axes of rotation of the excenters. By aligning the axes of rotation of the excenters, their eccentric masses are configured to rotate around the same axes, by which the occurring of torsion is reduced substantially.

The eccentric forces result from the centrifugal forces of the rotating eccentric masses and describe a circular pattern. The eccentric forces are aligned in a radial direction, with respect to the axis of rotation, and lie in a plane that is perpendicular to the axis of rotation. The first plane, in which the first forced vibratory loads lie, is thereby aligned perpendicular to the axis of rotation of the excenter of the first excitator and the second plane, in which the second forced vibratory loads lie, is aligned perpendicular to the axis of rotation of the excenter of the second excitator.

The axis of rotation of the excenter of the first excitator is aligned concentric with the axis of rotation of the excenter of the second excitator, which means that the first plane and the second plane lie parallel to each other, being spaced from each other along the axis of rotation.

The test rig may be set such, that the eccentric masses are configured to rotate in the same direction. The eccentric forces of both eccentric masses thereby accumulate into a single, combined eccentric force.

Alternatively, the test rig is set such, that the eccentric masses rotate in opposite directions. This gives the result that the eccentric forces may accumulate each other in one orthogonal direction, for example in the vertical direction, whereas they cancel each other out in another orthogonal direction, being for example the horizontal direction.

In an embodiment of the test rig, the eccentric forces may be aligned such, that the one orthogonal direction of the load, in which the eccentric forces accumulate, is aligned parallel to a plane of the test specimen, in order to load the test specimen in-plane. The other orthogonal direction, in which the eccentric forces are cancelled out, may be aligned out-of-plane with the test specimen, such that out-of-plane loading of the test specimen is substantially reduced.

By adjusting a relative position, e.g. a phase angle between the rotating eccentric mass of the first excenter and the rotating eccentric mass of the second excenter, it may be selected in which direction the eccentric forces are accumulated and in which direction the eccentric forces are cancelled out.

In an embodiment, the test rig may comprise an adjustment device, which is configured to adjust the relative position between the rotatable eccentric mass of the first excenter and the rotatable eccentric mass of the second excenter. The adjustment device may, at least during the fatigue testing with the test rig, be configured to adjust the phase angle between the rotating eccentric masses.

In an embodiment, the excenter of the first excitator and/or the excenter of the second excitator comprises a length-adjustable arm, which extends in a radial direction with respect to an axis of rotation of the respective excitator. The eccentric mass of the respective excenter is connected to the length-adjustable arm. The arm and the eccentric mass are configured to be rotated together around the axis of rotation, in order to generate the eccentric force. The length-adjustable arm provides that a radial distance between the eccentric mass and the axis of rotation may be adapted, in order to change the magnitude of the eccentric force that is actuated by the respective excitator.

In a further embodiment of the test rig, the weight of the eccentric mass of at least one of the excenters is adaptable in order to adapt the eccentric force that is generated by the respective excenter.

The magnitude of the first eccentric force can thereby be set to differ from the magnitude of the second eccentric force, because the eccentric forces are, amongst others, dependent on the weight of the eccentric masses and their respective eccentricity. With this embodiment, it may still be achieved that the eccentric forces of both eccentric masses accumulate each other and cancel each other out at least partially.

If, for example, the weight of the first eccentric mass were to be larger than the weight of the second eccentric mass, the second eccentric forces may be cancelled out, whereas a component of the first eccentric force remains present. The resulting components of the first eccentric force and the second eccentric force accumulate in the one orthogonal direction and cancel out in the second orthogonal direction, whereas the remaining component of the first eccentric remains directed in a single direction and has a sinusoidal amplitude, at least when the first and second eccentric are rotating in opposite directions.

In a further embodiment, the eccentric mass of at least one of the excenters comprises a chamber, defining an interior. The interior of the chamber comprises a selective amount of addable or removable weight elements in order to change the weight of the respective eccentric mass.

The weight elements are preferably made of a material with a relatively high density. Upon addition of weight elements into the interior of the eccentric mass, the overall weight of the eccentric mass with its respective weight elements is increased, resulting in a larger eccentric force for the same rotational velocity. Upon removing weight elements from the interior of the eccentric mass, the overall weight of the eccentric mass is reduced and the resulting eccentric force is reduced accordingly.

In an embodiment of the test rig, the eccentric mass of each of the excenters are provided with an interior and weight elements, which allow that the weight of each of the eccentric masses can be adjusted. Preferably, the weight elements are provided as relatively small pellets, e.g. being made from tungsten, which is a metal with a relatively high density.

In an alternative or additional embodiment of the test rig, a frequency of the rotation of the eccentric mass of the excenters is adaptable. The frequency is defined as the amount of rotations of the eccentric mass per unit of time and is proportional to the rotational velocity of the eccentric mass.

By adjusting the frequency of the rotation of the eccentric masses, the resulting eccentric forces are adjusted as well. Hence, the eccentric forces are not only dependent on the weight of the eccentric masses, but are furthermore dependent on a radial distance between the axis of rotation and the eccentric mass and are dependent on the frequency or rotational velocity of the eccentric mass.

When the rotation frequency were to be increased, the amount of rotations per unit of time is increased and the eccentric force becomes larger, whereas a decrease in the rotation frequency will result in a lower eccentric force.

By adjusting the rotational frequency, the eccentric forces may be adjusted during the test itself, whereas it is required to stop the test, or at least to stop the rotation of the eccentric masses, when the weight of the eccentric masses were to be adjusted.

In an embodiment, the test rig further comprises a control unit. The control unit is configured to control the first excitator and the second excitator in order to set a frequency of the first forced vibratory load and the second forced vibratory load and/or to set a phase shift between the first forced vibratory load and the second forced vibratory load.

By setting the frequency of the forced vibrational loads, the applied frequency of the excitators on the test specimen may be set. The test rig is suitable to be used for various types and/or sizes of test specimen, each having a different resonance frequency and each requiring a different testing frequency.

By setting the phase shift between the first forced vibratory load and the second forced vibratory load, the direction and magnitude of the resulting combined vibratory load may be set, for example when the first eccentric and the second eccentric rotate in the same direction. If, for example, the phase shift between the first forced vibratory load and the second forced vibratory load were to be set at 90°, the resulting combined load will be directed in between the first forced vibratory load and the second forced vibratory load. If the phase angle were to be set at 180°, both vibratory loads will act in opposite directions to each other and will cancel each other out when, for example, the first eccentric and the second eccentric rotate in the same direction.

In case the magnitudes of the first forced vibratory load and the second forced vibratory load were to be the same, the first situation, having the 90° angle in between the loads, will result in a combined force at an angle of 45° to both of the forced vibratory loads. The second situation will, with equal load magnitudes, result in a full cancellation of both forced vibratory loads.

The above-mentioned combining and/or cancelling of the first forced vibratory load and the second forced vibratory load may in particular be advantageous when the first eccentric mass is configured to rotate in a rotation direction that is opposite to the direction in which the second eccentric mass is configured to rotate.

In a further embodiment of the test rig, the control unit may be configured to control a first motor of the first excitator, in order to control the rotational speed and/or the phase of the eccentric mass of the first excitator. Alternatively or additionally, the control unit may be configured to control a second motor of the second excitator, in order to control the rotational speed and/or the phase of the eccentric mass of the second excitator.

The control unit according to this embodiment is preferably configured to control the first motor independently from the second motor, in order to control a relative rotational speed between the eccentric mass of the first excitator and the eccentric mass of the second excitator and/or to control a phase shift between the eccentric mass of the first excitator and the eccentric mass of the second excitator.

The present invention further provides a testing assembly for fatigue testing of a test specimen, wherein the testing assembly comprises:
- a test rig, and
- a test specimen,
wherein a first end of the test specimen is connected to a first excitator of the test rig, wherein a second end of the test specimen is connected to a second excitator of the test rig.

In the testing assembly according to the present invention, the test specimen is arranged in between the first excitator and the second excitator, having opposite ends that are connected to a connector of a respective one of the excitators.

In an embodiment of the testing assembly, the connectors of the respective excitators are directly connected to the respective end of the test specimen, preferably by means of an end-to-end connection or a bolted flange connection, in order to provide for a rigid coupling between the test specimen and the connectors of the respective excitator, in order to substantially prevent the connector itself from being subjected to fatigue loads.

In an embodiment, the first excitator comprises a first motor, which is configured to rotate an eccentric mass of the first excitator. The second excitator comprises a second motor, which is configured to rotate an eccentric mass of the second excitator. Each of the excitators thereby has its own individual motor and the first excitator and the second excitator do not share a common motor. This provides the advantage that the excenters of both excitators may be controlled individually, which may allow for more realistic fatigue loads that are to be applied on the test specimen. Preferably, the first motor is a first electric motor and the second motor is a second electric motor.

In an embodiment, the test specimen is provided as an axisymmetric test specimen. The axisymmetric test specimen comprises a first tubular section and a second tubular section, which are aligned concentrically and which are joined to each other by means of a butt weld, flanged or threaded connection. Such an axisymmetric test specimen may be tested with the test rig in order to determine the fatigue properties of the butt weld, flanged or threaded connection.

In an alternative embodiment, the test specimen comprises a junction, which is arranged between two opposing tubular sections of the test specimen. The junction may project away from the tubular sections in a radial direction and may be joined to each other by means of a multi-pass weld, which extends around the perimeter of the tubular sections and the junction.

Each of the excitators is configured to subject the respective ends of the test specimen to a forced vibratory load in order to induce a vibration in the test specimen, being applied from both opposite ends of the test specimen, in order to subject the test specimen to fatigue stresses and to test the fatigue behaviour of the test specimen.

In an embodiment of the testing assembly, at least a portion of the test specimen extends along a longitudinal axis. The first plane and the second plane are perpendicular to the longitudinal axis, such that the first forced vibratory load and the second forced vibratory load are aligned in a radial direction with respect to the longitudinal axis.

The test specimen is, in this embodiment, preferably provided as an elongate specimen, substantially extending along the longitudinal axis. The first and second plane, in which the first force forced vibratory load and the second forced vibratory load respectively lie, are aligned perpendicular to the longitudinal axis. The vibratory loads are thus aligned perpendicular to the longitudinal axis of the test specimen.

Preferably, the longitudinal axis of the test specimen is concentric with a centreline of the test specimen and the first forced vibratory load and the second forced vibratory load preferably project from the centreline or longitudinal axis. The forced vibratory loads thereby project away from the centreline in radial directions.

In a further embodiment, the test specimen is, during the fatigue testing, subjected to a transversal wave deformation, having a direction that is in the radial direction with respect to the longitudinal axis. The amplitude of the deformed resonating test specimen is thereby aligned perpendicular to the longitudinal axis of the test specimen.

The transversal wave is preferably a standing wave, having a half curved, for example half sinusoidal, mode shape with two nodes and an antinode. At the nodes of the node shape, the amplitude of the deformed shape is zero, whereas the amplitude is at its maximum at the antinode, which is arranged in between the nodes. In a further embodiment, a higher-order mode shape may be induced comprising n modes and n-1 antimodes.

The test specimen may be dimensioned such, that the mode shape is an Eigen mode shape, when the vibratory loads were to be applied close to a corresponding Eigen frequency. The test specimen is preferably dimensioned such, that a length of the test specimen between the opposing ends corresponds to any half-wavelength of the mode shape and that the opposing first and second ends of the test specimen are provided at the nodes of the mode shape. The amplitude is thereby the largest in between the opposing ends.

In a further embodiment of the testing assembly, the at least one support of the test rig is arranged at a corresponding node of the deformed test specimen and configured to support the test specimen at the respective node. A respective one of the supports is thereby arranged at a position along the node at which the amplitude is substantially zero and at which, at least in theory, no vibrations are transmitted from the test specimen onto the at least one support.

In an embodiment of the testing assembly, the at least one support is located underneath the test specimen. The test specimen thereby rests on the at least one support.

In a further embodiment, the testing assembly comprises a cushion for each of the at least one supports. The cushion is arranged on the support and the test specimen rests on the cushion. For example, the cushion is an inflatable air cushion.

The present invention further provides a method for fatigue testing of a test specimen, comprising the steps of:
- supporting a test specimen with at least one support of a test rig of a testing assembly,
- subjecting, with the first excitator, the first end of the test specimen to a first forced vibratory load,
- subjecting, with the second excitator, the second end of the test specimen to a second forced vibratory load,
wherein both of the steps of the subjecting are carried out simultaneously.

With the method according to the present invention, a forced vibratory load may be applied on two opposite sides of the test specimen. This gives the result that the applied load may be the same on both opposite sides of the test specimen, whereas the known test method from the prior art only applied a vibratory load on one end of the test specimen. The loading on one side of the test specimen could give rise to different stresses occurring on the one end of the test specimen, at which the load were to be applied, and the other end of the test specimen, being a free end. The method according to the invention provides that fatigue stresses, resulting from the resonating and vibrating test specimen, are more evenly spread in the test specimen.

In an embodiment of the method, the at least one support is located underneath the test specimen and the test specimen rests on the at least one support. Preferably, each of the at least one supports is located underneath a positon of the test specimen where a node of a deformed mode shape of the test specimen is to be located during the fatigue testing of the test specimen.

In a further embodiment, the test rig comprises a cushion for each of the at least one supports. The cushion is arranged on the support and the test specimen rests on the cushion. For example, the cushion is an inflatable air cushion.

In an embodiment, the method further comprises the steps of controlling a frequency of the first forced vibratory load and/or the second forced vibratory load, and/or controlling a phase shift between the first forced vibratory load and the second forced vibratory load.

By controlling the frequency of at least one of the forced vibratory loads, the frequency of the vibrations in the test specimen may be adjusted. The frequency may for example be gradually increased, in order to measure the responsive vibrational behaviour of the test specimen as a function of the applied frequency.

Preferably, the frequency is set near an Eigen frequency of the test specimen, such that the resulting mode shape of the test specimen corresponds to an Eigen mode shape of the test specimen. The advantage of subjecting the test specimen to vibrations at or near an Eigen frequency is that it requires a relatively low amount of energy to vibrate the test specimen, when compared to inducing vibrations at frequencies that lie away from the Eigen frequencies. At these remote frequencies, damping occurs in the test specimen.

By controlling a phase shift between the first forced vibratory load and the second forced vibratory load, a magnitude and/or direction of the combined vibratory load may be set, as is explained above.

The phase shift between the first forced vibratory load and the second forced vibratory load may determine the amount of accumulation or cancellation of the first forced vibratory load and the second forced vibratory load and may therefor determine the magnitude and direction of the combined vibratory load.

In a further embodiment of the method, the first excitator and the second excitator each comprise an excenter. Each of the excenters comprises an eccentric mass, which is rotatable around an axis of rotation in order to generate an eccentric force. Each of the excenters is configured to transmit a respective eccentric force onto a respective end of the test specimen in order to subject the test specimen to the forced vibratory loads. The method further comprises the step of adapting the weight of the eccentric mass of at least one of the excenters in order to adapt the eccentric force that is generated by the respective excenter.

By adjusting the weight of at least one of the eccentric masses, preferably both of the eccentric masses, the magnitude of the generated eccentric forces may be adjusted. By increasing the weight of the eccentric mass, the eccentric force increases, when the rotational velocity and the distance between the eccentric mass and the axis of rotation were to be kept the same. By decreasing the weight of the eccentric mass, the generated eccentric force is decreased accordingly.

In an embodiment of the method, a radial distance between an eccentric mass of the first excitator and its respective axis of rotation and/or a radial distance between an eccentric mass of the second excitator and its respective axis of rotation may be adapted, in order to change the magnitude of the eccentric force that is exerted by the respective excitator. This adjusting of the respective radial distance may be done by adjusting a radial length of a length-adjustable arm that extends in a radial direction with respect to an axis of rotation of the respective excitator, to which the eccentric mass of the respective excenter is connected.

The testing method may, when a testing assembly is provided that has two excitators with two excenters, further comprise the controlling of a rotational velocity of the eccentric masses of the excenters in order to control the frequency of the first forced vibratory load and the second forced vibratory load. This method may alternatively or additionally comprise the controlling of a phase shift between the first rotating eccentric mass and the second rotating eccentric mass in order to control the phase shift between the first forced vibratory load and the second forced vibratory load.

By controlling the phase shift between the first forced vibratory load and the second forced vibratory load, the magnitude and direction of the combined vibratory force may be controlled. When the first eccentric mass rotates in the same direction as the second eccentric mass, the direction of the combined vibratory load may be in between the first forced vibratory load and the second forced vibratory load and the magnitude of the combined vibratory load may be in between zero and the sum of the magnitude of the first forced vibratory load and the magnitude of the second forced vibratory load. When the first eccentric mass and the second eccentric mass rotate in opposite directions, the phase shift determines the amount of accumulation and cancellation of the first forced vibratory load and the second forced vibratory load and determines the directions in which the accumulation and the cancellation of the first forced vibratory load and the second forced vibratory load may occur.

In an embodiment of the method, the first excitator comprises a first motor, which is configured to rotate the eccentric mass of the first excitator. The second excitator comprises a second motor, which is configured to rotate the eccentric mass of the second excitator. Each of the excitators thereby has its own individual motor and the first excitator and the second excitator do not share a common motor. This provides the advantage that the excenters of both excitators may be controlled individually, which may allow for more realistic fatigue loads that are to be applied on the test specimen. Preferably, the first motor is a first electric motor and the second motor is a second electric motor.

In an embodiment of the method, the first motor of the first excitator may be controlled, in order to control the rotational speed and/or the phase of the eccentric mass of the first excitator. Alternatively or additionally, the second motor of the second excitator may be controlled, in order to control the rotational speed and/or the phase of the eccentric mass of the second excitator.

Preferably, the first motor is controlled independently from the second motor, in order to control a relative rotational speed between the eccentric mass of the first excitator and the eccentric mass of the second excitator and/or to control a phase shift between the eccentric mass of the first excitator and the eccentric mass of the second excitator.

In an embodiment, the method further comprises the step of determining one or more fatigue properties of the test specimen, for example the number of cycles until failure under a certain load, or local strains close to a weld. By measuring one or more of these properties over time, the fatigue behaviour of the test specimen may be determined.

The present invention further provides a method for designing a fatigue test, comprising the steps of:
- simulating a virtual model of the test specimen,
- determining, on the basis of the virtual model, an Eigen frequency of the test specimen,
- determining, on the basis of the virtual model, and Eigen mode shape of the test specimen,
- simulating a load case for the fatigue testing of the virtual model, wherein the load case comprises subjecting the virtual model to a first forced vibratory load and a second forced vibratory load,
- performing a method for fatigue testing of the test specimen, on the basis of the simulated load case,

wherein the at least one support of the test rig is arranged at a location in which it supports the test specimen at a node of the determined Eigen mode shape,
wherein the frequency of the first forced vibratory load and the second forced vibratory load is set to be substantially the same as the determined Eigen frequency.

The method for the designing of the fatigue test comprises the simulating of virtual model, such as a three-dimensional computer model, preferably a finite-element (FEM) model or a mathematical model. In the virtual model, the test specimen is modelled and the Eigen frequencies and corresponding Eigen mode shapes of the virtual model of the test specimen are determined, which correspond to Eigen frequencies and Eigen mode shapes of the real-life test specimen.

After the determining of the Eigen frequencies and corresponding Eigen mode shapes, the virtual model is subjected to a virtual load case, corresponding to a load case that could possibly be applied onto the real-life test specimen in the real-life test rig. The load case in the virtual model comprises the dynamic loading of the virtual test specimen, in order to determine a dynamic response of the test specimen, and is based on the first forced vibratory load and the second forced vibratory load being applied at opposite ends of the test specimen. The modelled forced vibratory loads may, during the real-life fatigue testing, correspond to the dynamic loads that are respectively applied on the test specimen by the first excitator and the second excitator.

After the virtual determination of the Eigen frequencies, the corresponding Eigen mode shapes and the corresponding adjustment of the virtual test specimen, the real-life test specimen may be tested in a test rig, preferably in a test rig according to the present invention.

During the real-life fatigue testing of the test specimen, the at least one support of the test rig is arranged at a positon along the test specimen at which a node is present in a selected one of the determined Eigen mode shapes from the virtual model. At the node, the displacement amplitude of the test specimen is minimal, preferably equal to zero, which implies that the transmission of vibration onto the at least one support is minimized as well.

Preferably, the at least one support is located underneath the test specimen and the test specimen is configured to rest on the at least one support. The test rig may comprise a cushion for each of the at least one supports, which is adapted to be arranged on the support and the test specimen may be configured to rest on the cushion. For example, the cushion is an inflatable air cushion.

The frequency of the first forced vibratory load and the second forced vibratory load is set to be substantially close to a selected one of the determined Eigen frequencies from the virtual model. As such, the test specimen is vibrated close to the determined Eigen frequency and describes a mode shape that is substantially the same as a corresponding Eigen mode shape.

The method for the designing of the fatigue test according to the present invention provides the advantage over the known methods that any real-life test specimen may be modelled in a virtual model in order to determine its Eigen frequencies and corresponding Eigen mode shapes, within the physical boundaries of the first excitator and the second excitator. This makes the fatigue testing more efficient than prior art testing methods, because those methods require special test specimen, as in the prior art fatigue testing method. These special test specimens do not necessarily correspond to desired test specimen, or require experimental determination of suitable vibration frequencies and vibration mode shapes.

Additionally, the method provides the advantage that the suitable location for the at least one support may be determined up front, because the locations of the nodes of the vibration mode shape are determined in the virtual model and do not need to be determined experimentally.

In an embodiment of the method, the step of the performing of the fatigue testing comprises the determining of the Eigen frequency and corresponding Eigen mode shape of the test specimen. This step of determining is based on the actual test specimen and not on the virtual model, which brings the advantage that differences between the theoretical Eigen frequency and Eigen mode shape from the virtual model can be compared with the experimental Eigen frequency and corresponding Eigen mode shape of the actual test specimen.

The Eigen frequency and corresponding Eigen mode shape of the actual test specimen are preferably determined on the basis of the determined Eigen frequency and corresponding Eigen mode shape from the model, for example by varying around these theoretical values. This brings the advantage that the required time to determine the experimental Eigen frequency and corresponding Eigen mode shape may be decreased. The experimental Eigen frequency and corresponding Eigen mode shape of the actual test specimen may form the basis for the fatigue test, because the testing frequency for the fatigue test is set to be close to the experimentally determined Eigen frequency of the test specimen.

In an embodiment of the method, the frequency of the first forced vibratory load and the second forced vibratory load is set to be in the range between 95% and 99% of the determined Eigen frequency of the test specimen.

It is, in theory, desired to vibrate the test specimen close to its Eigen frequency, in order to obtain the determined corresponding Eigen mode shape and to reduce amount of required energy to vibrate the test specimen. In practice, however, it has been found by the applicant that the controlling of the deformation of the test specimen becomes increasingly difficult when the vibration frequency approaches the determined Eigen frequency at frequencies above approximately 99% of the determined Eigen frequency. In particular when the vibration frequency exceeds the Eigen frequency, the behaviour of the test specimen may become unpredictable and higher-order responses may be achieved.

By keeping the vibration frequency in the range between 95% and 99% of the determined Eigen frequency, an optimum is found between reducing the required energy for vibrating the test specimen, while preventing the deformation of the test specimen from getting out of control.

Further characteristics of the present invention will be explained below, with reference to embodiments thereof, which are displayed in the appended drawings, in which:
Figure 1 schematically depicts a side view on an embodiment of the testing assembly according to the invention;
Figure 2 depicts a cross-sectional schematic view on an embodiment of the excenter of the testing assembly;
Figures 3a - 3e schematically depict resulting forces to which the test specimen may be subjected;
Figure 4a depicts a graphical representation of the displacement of a portion of the test specimen over time;
Figure 4b depicts a graphical representation of various Eigen mode shapes of the test specimen; and
Figures 5a and 5b depict a graphical representation of the displacement of the portion of the test specimen for various phase shifts.

Throughout the figures, the same reference numerals are used to refer to corresponding components or to components, which have a corresponding function.

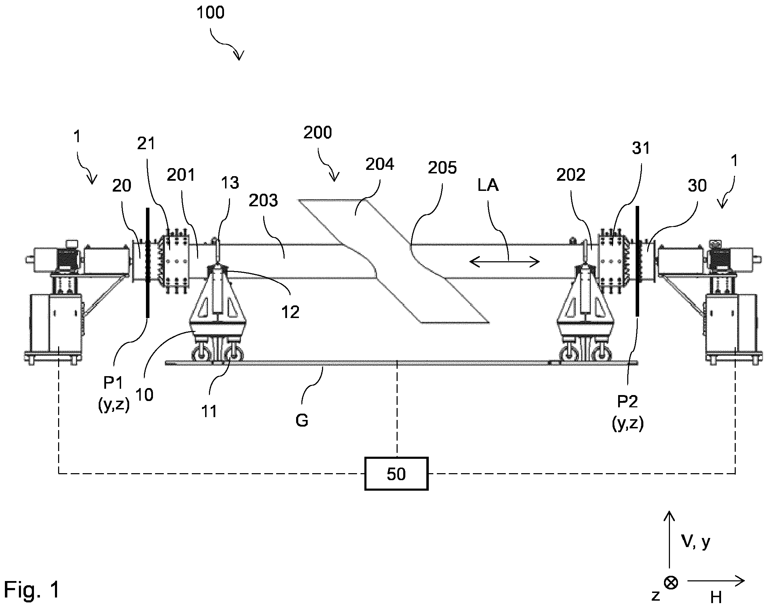

Figure 1 schematically depicts an embodiment of the testing assembly according to the present invention, generally referred to with reference numeral 100. The testing assembly 100 comprises a test rig 1 and a test specimen 200.

The test specimen 200 has a first end 201, which is in figure 1 displayed on the left, and a second end 202, which is displayed on the right. The second end 202 of the test specimen 200 is arranged opposite to the first end 201. The test specimen 200 substantially extends in between its first end 201 and its second end 202 along a longitudinal axis (LA) of the test specimen 200.

In the present embodiment, the test specimen 200 is provided as a tubular test specimen, which comprises a hollow tube 203 that extends along the longitudinal axis (LA) and which has perpendicular to the longitudinal axis (LA), a circular cross section. In the middle between the first end 201 and the second end 202, the test specimen 200 comprises a junction 204. The junction 204 is provided tubular as well and is connected to the hollow tube 203 by means of a welded connection 205.

In the present embodiment, the junction 204 is set at a non-right angle with the longitudinal axis (LA) and is aligned in a vertical plane through the longitudinal axis (LA). Alternatively, however, the test specimen may comprise a junction at a right angle, or may even be free of any junctions.

The test rig 1 of the testing assembly 100 is set on a ground plane (G) and comprises several parts that may be moved across the ground plane (G). The test rig 1 comprises two supports 10, which comprises rollers 11, with which they rest on the ground plane (G) and with which they may be moved across the ground plane (G).

The supports 10 support the test specimen 200, at least during the fatigue testing of the test specimen 200. The test specimen 200 thereby rests on a soft portion 12 of each respective support 10. Each of supports 10 further comprises a strap 13, which extends over the test specimen 200 and with which the test specimen 200 may be fastened to the support 10, in order to prevent that, during the fatigue testing, the test specimen 200 will fall from the respective support 10. In the present embodiment, the strap 13 is fastened to a limited extent in order to allow relative movements between the test specimen 200 and the support 10 up to a certain extent, in order to obtain a free-floating test specimen 200.

The test rig 1 further comprises a first excitator 20 and a second excitator 30, which also rest on the ground plane (G) and which may be moved across the ground plane (G) in order to adjust the test rig 1 to receive test specimen 200 with various dimensions. The first excitator 20 and the second excitator 30 are each configured to subject the test specimen 200 to a respective forced vibratory load.

The first excitator 20 comprises a first connector 21, with which the first excitator 20 is connected to the first end 201 of the test specimen 200. The first connector 21 is, in the present embodiment of the test rig 1, provided as a sleeve, which defines a cavity in which the first end 201 of the test specimen 200 is arranged and in which the test specimen 200 is, at least during the fatigue testing, secured to the first connector 21.

The first excitator 20 is configured to apply a first forced vibrational load on the first end 201 of the test specimen 200, in order to test the fatigue properties of the test specimen 200. A direction in which the first forced vibrational load is applied may vary, but lies in a first plane (P1), which is aligned perpendicular to the longitudinal axis (LA) of the test specimen 200, at least when the test specimen 200 is arranged in the test rig 1.

The second excitator 30 comprises a second connector 31, with which the second excitator 30 is connected to the second end 202 of the test specimen 200. The second connector 31 is, in the present embodiment of the test rig 1, provided as a sleeve as well, which defines a cavity in which the second end 202 of the test specimen 200 is arranged and in which the test specimen 200 is, at least during the fatigue testing, secured to the second connector 31.

The second excitator 30 is configured to apply a second forced vibrational load on the second end 202 of the test specimen 200, in order to test the fatigue properties of the test specimen 200. A direction in which the second forced vibrational load is applied may vary, but lies in a second plane (P2), which is aligned perpendicular to the longitudinal axis (LA) of the test specimen 200 as well; at least when the test specimen 200 is arranged in the test rig 1.

The first forced vibrational load and the second forced vibrational load are applied on the test specimen 200 on opposite ends 201, 202, but form, in combination, a combined forced vibrational load to which the test specimen 200 is subjected. The first plane (P1), in which the first forced vibrational load is applied, is aligned parallel to the second plane (P2), in which the second forced vibrational load is applied, which implies that the combined forced vibratory load is applied parallel to the first plane (P1) and the second plane (P2) as well, perpendicular to the longitudinal axis (LA).

The first excitator 20 and the second excitator 30 of the test rig 1 each comprise a respective excenter 60. The excenter 60 comprises an eccentric mass 61, which is configured to be rotated around an axis of rotation (RA). The eccentric mass 61 is set at a distance (r) from the axis of rotation (RA), which means that a centrifugal, or eccentric force (F) is generated by the rotating eccentric mass 61. The eccentric force (F) is, with respect to the axis of rotation (RA), aligned radially.

The magnitude of the eccentric force (F) is dependent on the weight (m) of the eccentric mass 61, the distance (r) between the axis of rotation (RA) and the eccentric mass 61 and the angular velocity (ω) or rotation frequency (f) of the rotating eccentric mass 61. This means that the magnitude of the eccentric force (F) may be adjusted by adjusting either one of the weight (m), distance (r) or rotation frequency (f).

The excenters 60 of the first excitator 20 and the second excitator 30 each have an axis of rotation (RA) that is aligned concentrically with respect to the longitudinal axis (LA) of the test specimen 200, at least when the test specimen 200 is arranged in the test rig 1. The eccentric force (F) that is generated by each of the excenters 60 is thereby aligned in the radial direction (R), with respect to the longitudinal axis (LA), and extends perpendicular to the longitudinal axis (LA) and parallel to the first plane (P1) and the second plane (P2).

In the present embodiment of the testing assembly 100, the first forced vibratory load, to which the test specimen 200 is subjected, results from the eccentric force that is generated by the excenter 60 of the first excitator 20. The second forced vibratory load, to which the test specimen 200 is also subjected, results from the eccentric force that is generated by the excenter 60 of the second excitator 30.

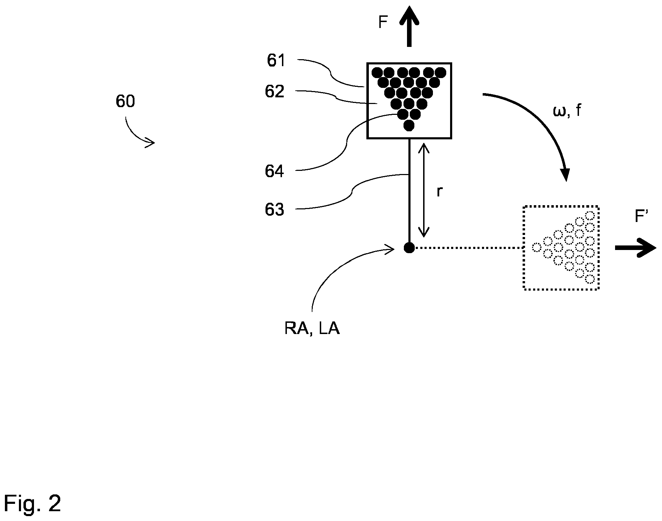

In figure 2, an embodiment of an excenter 60 is displayed schematically. The excenter 60 comprises a single eccentric mass 61, which is configured to rotate around an axis of rotation (RA). The axes of rotation (RA) of the excenters 60 of both excitators 20, 30 are aligned concentrically with each other and with the longitudinal axis (LA) of the test specimen 200, which implies that the eccentric mass 61 is configured to rotate around the longitudinal axis (LA) as well.

Upon rotation of the eccentric mass 61, at its angular velocity (ω) or rotation frequency (f), a centrifugal force (F) is generated, which projects away from the eccentric mass 61 in the radial direction. In figure 2, the solid lines represent a first orientation of the eccentric mass 61, having a centrifugal force (F) directed into an upwards direction, whereas the dashed lines represent a second orientation of the eccentric mass 61, being rotated with respect to the first orientation, in which the centrifugal force (F') is directed to the right.

The eccentric mass 61 defines an interior 62, which is enclosed by walls of the eccentric mass 61 and which is adapted to receive weight elements 64. The weight elements 64 are, in the present embodiment, made of tungsten and have a relatively large density. By introducing fewer or more weight elements 64 in the interior 62 of the eccentric mass 61, an overall weight (m) of the eccentric mass 61 may be changed.

Upon increasing the amount of weight elements 64 in the interior 62 of the eccentric mass 61, the weight (m) of the eccentric mass 61 is increased and the centrifugal force (F) increases accordingly. The centrifugal force (F) is decreased when weight elements 64 are removed from the interior 62 of the eccentric mass 61.

The eccentric mass 61 of the excenter 60 is connected to its turning point by means of an arm 63, which has a length (r) that corresponds to the radius of the circular path that is described by the eccentric mass 61 during rotation.

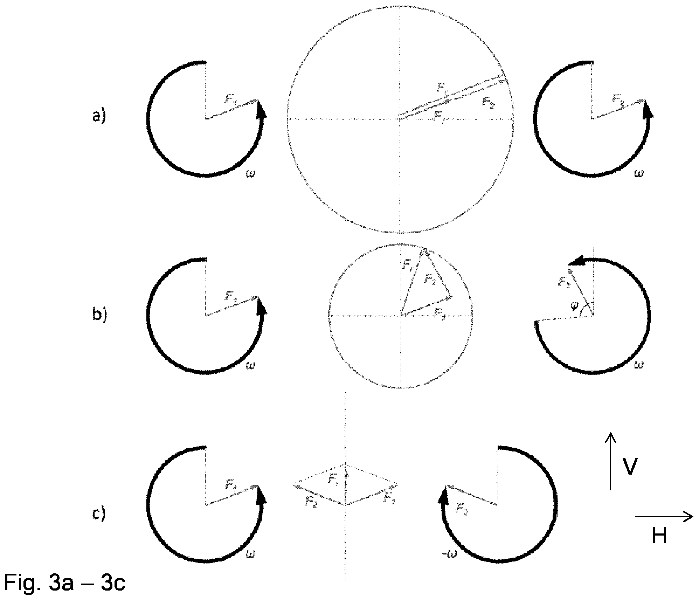

Figures 3a - 3e display various combinations of respective first forced vibratory loads or first eccentric forces (F1) from the first excitator 20, second forced vibratory loads or second eccentric forces (F2) from the second excitator 20 and combined forced vibratory loads, or combined eccentric forces (Fr), which are applied on the test specimen 200. The figures 3a - 3e display the applied forces in a cross-sectional view, perpendicular to the longitudinal axis (LA) of the test specimen 200 and the axes of rotation (RA) of the excenters 60.

In figure 3a, the first eccentric force (F1) from the excenter 60 of the first excitator 20 has a magnitude that is the same as the magnitude of the second eccentric force (F2) from the excenter 60 of the second excitator 30. The eccentric masses 61 of both excenters 60 rotate in the same, counter-clockwise direction at the same angular velocity (ω), or rotation frequency. The first eccentric force (F1) is constantly aligned in the same direction as the second eccentric force (F2), which implies that there is no phase shift between the first eccentric force (F1) and the second eccentric force (F2). The combined eccentric force (Fr) is given by the vector sum of the first eccentric force (F1) and the second eccentric force (F2), which implies that the combined eccentric force (Fr) is aligned in the same direction as the first eccentric force (F1) and the second eccentric force (F2) and that the combined eccentric force (Fr) has a magnitude that is the sum of the magnitude of the first eccentric force (F1) and the magnitude of the second eccentric force (F2), or twice the magnitude of the first eccentric force (F1) or the second eccentric force (F2).

In figure 3b, the magnitude of the first eccentric force (F1) is the same as the magnitude of the second eccentric force (F2), but the first eccentric force (F1) is not aligned in the same direction as the second eccentric force (F2). A phase shift (ϕ) is present between the first eccentric force (F1) and the second eccentric force (F2), which implies that the rotation of the first eccentric force (F1) precedes the rotation of the second eccentric force (F2) over a phase shift angle (ϕ). The combined eccentric force (Fr) is again the vector sum of the first eccentric force (F1) and the second eccentric force (F2), but the magnitude of the combined eccentric force (Fr) is smaller than the sum of the magnitudes of the first eccentric force (F1) and the second eccentric force (F2). This is schematically displayed in the centre-circle of figure 3b, which has a smaller radius than the centre-circle of figure 3a. It follows from figure 3b that the magnitude of the combined eccentric force (Fr) may be reduced by introducing a phase shift angle (ϕ) between the first eccentric force (F1) and the second eccentric force (F2).

If the phase shift (ϕ) were to be chosen 180°, the first eccentric force (F1) and the second eccentric force (F2) were to be aligned in opposite directions, thereby cancelling each other out. The combined eccentric force (Fr) will, with a phase shift (ϕ) of 180°, thus be zero, provided that the magnitude of the first eccentric force (F1) is the same as the magnitude of the second eccentric force (F2).

In figure 3c, the magnitude of the second eccentric force (F2) is the same as the magnitude of the first eccentric force (F1), similar as in figure 3a. However, the eccentric mass 61 of the excenter 60 of the second excitator 30 rotates in the opposite, clockwise direction and has an angular velocity (- ω). There is no phase shift angle (ϕ) in between the first eccentric force (F1) and the second eccentric force (F2), because the eccentric masses 61 are, for example, in their respective 12 o'clock positions at the same time. This gives the result that the components of the first eccentric force (F1) and the second eccentric force (F2) in one direction, the horizontal direction (H) in figure 3c, is cancelled out, because the horizontal components of the first eccentric force (F1) and second eccentric force (F2) are aligned in opposite directions. The components of the first eccentric force (F1) and the second eccentric force (F2) in an orthogonal direction, the vertical direction (V) in figure 3c, accumulate each other.

The resulting combined eccentric force (Fr) is again the vector sum of the first eccentric force (F1) and second eccentric force (F2). The combined eccentric force (Fr) does no longer describe a circular path, but oscillates in the vertical direction (V), because the horizontal components of the first eccentric force (F1) and the second eccentric force (F2) cancel each other out.

In case a phase shift angle (ϕ) were to be introduced between the counter-rotating masses in figure 3c, while keeping the magnitude of the first eccentric force (F1) the same as the magnitude of the second eccentric force (F2), the resulting linear oscillating combined eccentric force (Fr) will tilt accordingly over an angle that is equal to half the phase shift angle (ϕ). In case, for example, a phase shift angle (ϕ) of 180° were to be introduced between the first eccentric force (F1) and the second eccentric force (F2), the resulting combined eccentric force (Fr) will tilt over 90° and will be aligned parallel to the horizontal direction (H).

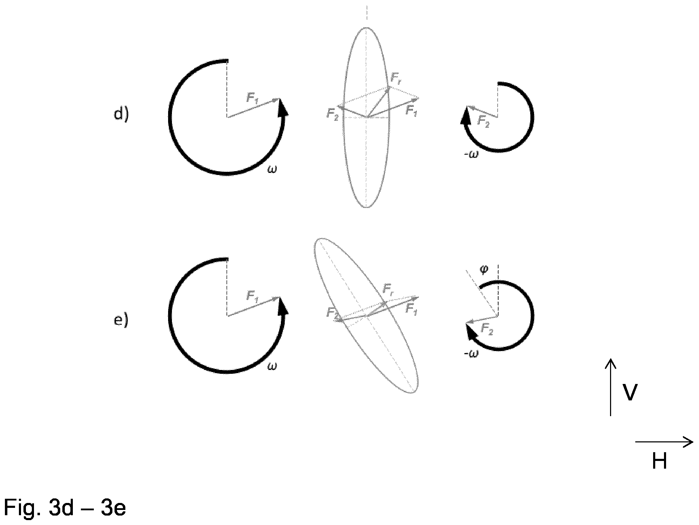

In figure 3d, both eccentric masses 61 again rotate in opposite directions, without any phase shift in between them. The magnitude of the first eccentric force (F1), however, is larger than the magnitude of the second eccentric force (F2). In the present embodiment, this may be achieved by increasing the weight (m) of the eccentric mass 61 in the excenter 60 of the second excitator 30. The resulting combined eccentric force (Fr) does no longer describe a circular movement, as in figures 3a and 3b, or an oscillating linear movement, as in figure 3c, but now describes an ellipsoid. The ellipsoid shape implies that the magnitude of the combined eccentric force (Fr) varies over time.

The combined eccentric force (Fr) varies between the sum of the first eccentric force (F1) and the second eccentric force (F2), when the combined eccentric force (Fr) is aligned parallel to the long axis of the ellipsoid, and the difference between the first eccentric force (F1) and the second eccentric force (F2), when the combined eccentric force (Fr) is aligned parallel to the short axis of the ellipsoid.

In figure 3e, the magnitude and rotational velocities of the first eccentric force (F1) and the second eccentric force (F2) are the same as in figure 3d. In figure 3d, a phase shift angle (ϕ) has been introduced between the first eccentric force (F1) and the second eccentric force (F2), compared to the situation in figure 3d. The introduced phase shift angle (ϕ) between the first eccentric force (F1) and the second eccentric force (F2) causes the correspond ellipsoid combined eccentric force (Fr) to tilt over an angle that is equal to half the phase shift angle (ϕ). Compared to figure 3d, the orientation of the maximum value of the combined eccentric force (Fr), along the long axis of the ellipsoid, and the orientation of the minimum value of the combined eccentric force (Fr), along the short axis of the ellipsoid, are tilted accordingly.

When a test specimen 200 were to be subjected to the circular combined eccentric force (Fr) of figures 3a and 3b, the fatigue stress will be constant around the perimeter of the test specimen 200. This means that the fatigue stresses, resulting from a deformation in the vertical direction (V) are the same as the fatigue stresses that result from a deformation in the horizontal direction (H).

The linear oscillating combined eccentric force (Fr) of figure 3c will, however, only give rise to fatigue stresses that result from a deformation in the vertical direction (V), because the combined eccentric force (Fr) does not have a component in the horizontal direction (H).

In figures 3d and 3e, the combined eccentric force (Fr) has components both in the vertical direction (V) and the horizontal direction (H). The magnitude of the combined eccentric force (Fr) in the vertical direction (V) differs from the magnitude of the combined eccentric force (Fr) in the horizontal direction (H), which means that the induced fatigue stresses in the test specimen 200 may differ between the vertical direction (V) and the horizontal direction (H).

These different fatigue stresses may, for example, be advantageous when a test specimen 200 were to be tested that has different stiffnesses in the vertical direction (V) and the horizontal direction (H). Alternatively, test specimen 200 may be tested that have different Eigen mode shapes in the vertical direction (V) and the horizontal direction (H).

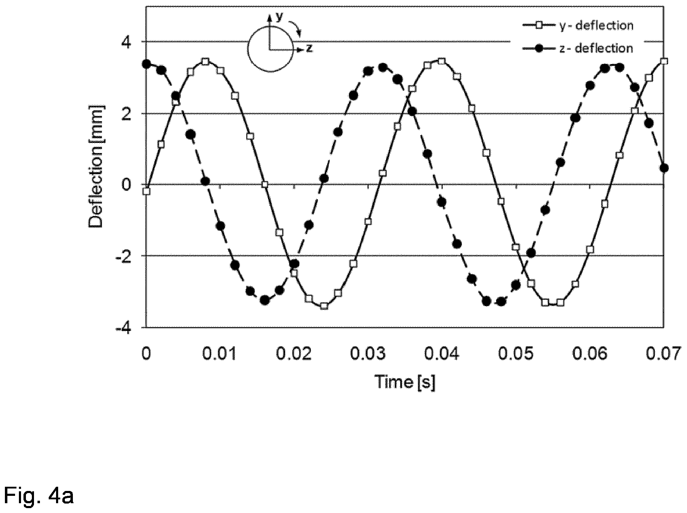

The combined forced vibratory load, being the combination of the first eccentric force (F1) and the second eccentric force (F2), acting on the test specimen 200, induces a vibrational response in the test specimen 200. Figure 4a schematically depicts the responsive behaviour of the test specimen 200 and displays the deflection of a measurement point on the test specimen 200 as a function of time, in a plane that is perpendicular to the longitudinal axis (LA) of the test specimen 200. A y-deflection thereby corresponds to a displacement of the measurement point in the vertical direction (V), whereas a z-deflection corresponds to a displacement of the measurement point in the horizontal direction (H).

The diagram in figure 4a depicts the responsive behaviour when the combined eccentric force (Fr) describes a circular movement, as in figures 3a and 3b. It is noted that the deflection in both directions describes a sinusoidal pattern, and that the deflection in the vertical y-direction follows the deflection in the vertical z-direction by a delay time, which causes the measurement point on the test specimen 200 to describe a clockwise circular movement.

The rotation frequency (f), or angular velocity (ω), of the rotating eccentric masses 61 is, during the fatigue testing of the test specimen 200, set near an Eigen frequency of the test specimen 200, preferably at 98% of the respective Eigen frequency. Vibrating the test specimen 200 at, or at least near its Eigen frequencies causes the test specimen 200 to resonate. The resonating of the test specimen 200 provides the effect that it requires less energy to vibrate the test specimen 200, compared to when it were vibrated at a frequency that is remote from one of its Eigen frequencies.

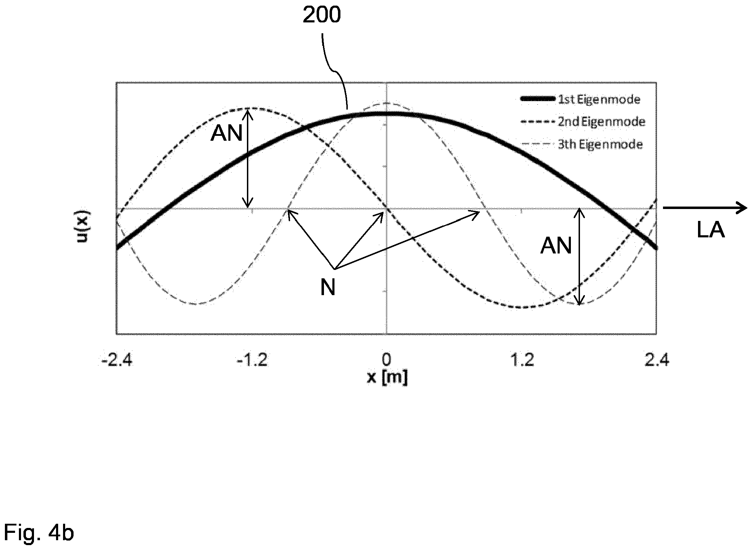

In case the test specimen 200 were to be vibrated at or near its Eigen frequency, the test specimen 200 will deform according to a corresponding Eigen mode shape. In figure 4b, a schematic representation is displayed of the first, second and third Eigen mode shape for a test specimen 200 with certain arbitrary dimensions. In figure 4b, the test specimen 200 is displayed from the side, similar as in figure 1, as is indicated by the displayed longitudinal axis (LA) of the test specimen 200.

The Eigen modes shapes of the test specimen 200 are all sinusoid and each have nodes (N), at which the deflection of the test specimen 200 is zero, and antinodes (AN), at which the deflection of the test specimen 200 is the largest.

During the fatigue testing of the test specimen 200, each of the supports 10 is arranged underneath the test specimen 200 at a position where a node (N) is present in the deformed mode shape. At these nodes (N), the test specimen 200 does not deflect as a result of the induced vibrations in the test specimen 200. Accordingly, the supports 10 do not need to compensate for any vibrations and do not need to absorb dynamic forces. Moreover, the supports 10 only need to statically support the test specimen 200.

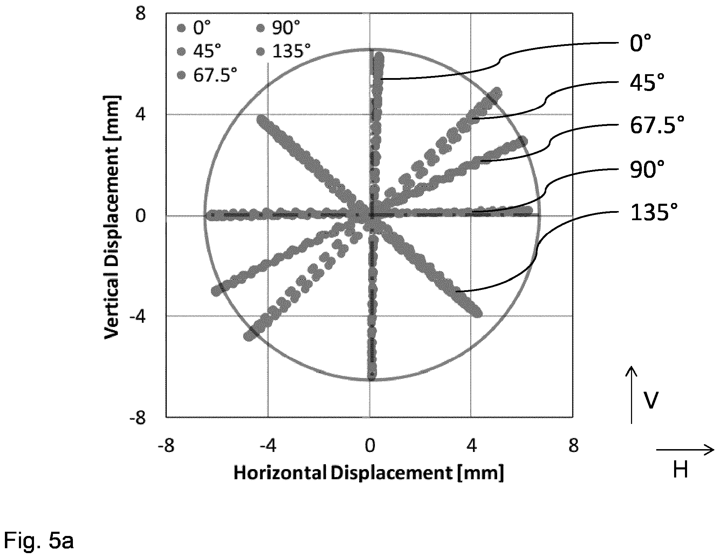

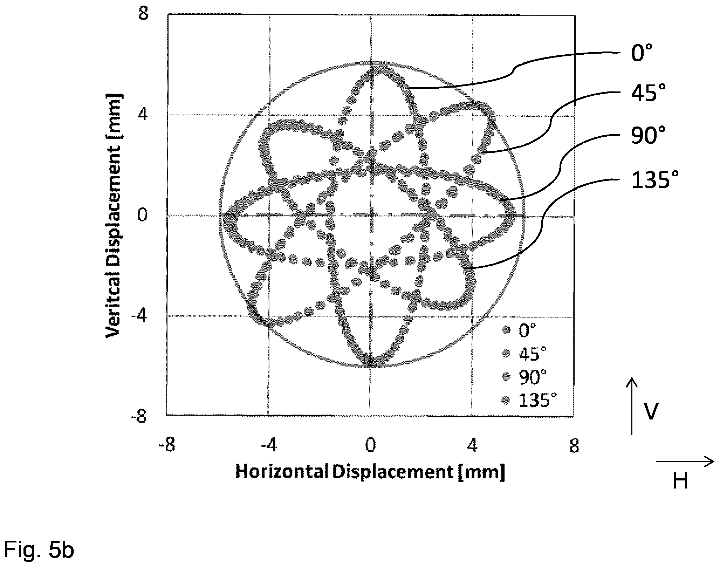

In figures 5a and 5b, the responsive vibrational behaviour of the test specimen 200 is displayed, if it were to be subjected to various first forced vibratory loads and second first forced vibratory loads, being respectively caused by first eccentric forces (F1) and second eccentric forces (F2) that are generated by counter-rotating eccentric masses 61. In the diagrams in figures 5a and 5b, the vertical displacement of a measurement point on the test specimen 200 is displayed as a function of the horizontal displacement of the measurement point.

In figure 5a, the magnitude of the applied first eccentric forces (F1) is equal to the magnitude of the applied second eccentric forces (F2). Having equal magnitudes of the eccentric forces (F1, F2) results, similar as in figure 3c, in oscillating linear combined eccentric forces (Fr) and, accordingly, linear displacements of the measurement point.

In figure 5a, the displacements are plotted for different phase shift angles (ϕ), being 0°, 45°, 67.5°, 90° and 135°. It follows from figure 5a that the oscillation direction of the combined forced vibratory load may be adjusted by changing the phase shift angle (ϕ) between the first eccentric force (F1) and the second eccentric force (F2). The resulting deformation of the test specimen 200 is thereby changed as well, as well as the fatigue stresses in the test specimen 200, resulting from the deformation of the test specimen 200.

In case it is, for example, desired to induce the largest fatigue stresses in the uppermost and lower-most fibres of the test specimen 200, the phase shift angle (ϕ) between the first eccentric force (F1) and the second eccentric force (F2) is likely to be set at 0°, because this only gives rise to vertical displacements and deformation in the vertical direction (V). In case the outermost fibres on the side need to be subjected to the largest fatigue stresses, these outermost fibres need to be deformed the most and the phase shift angle (ϕ) has to be set at 90°, in order to only induce horizontal displacements and deformation in the horizontal direction (H).

In figure 5b, the magnitude of the first eccentric force (F1) is set to be two times larger than the magnitude of the second eccentric force (F2). This is, in the present embodiment of the testing assembly 100, achieved by providing an eccentric mass 61 in the excenter 60 of the first excitator 20 having a weight (m) that is two times larger than the weight (m) of the eccentric mass 61 in the excenter 60 of the second excitator 30.

The provision of a first eccentric force (F1) and a second eccentric force (F2) with different masses gives, similar as the situation in figures 3d and 3e, the result that the resulting combined eccentric force (Fr) describes an ellipsoid path. In figure 5b, the corresponding ellipsoid displacement of the measurement point, resulting from the ellipsoid combined eccentric force (Fr), is displayed for different phase shift angles (ϕ), being 0°, 45°, 90° and 135°. It follows from figure 5b that the ellipsoid displacement of the measurement point is tilted upon the introduction of the phase shift angle (ϕ).

In case it is, for example, desired to have a small displacement, and corresponding low fatigue stress, in the horizontal outermost fibres of the test specimen 200, and to have a large displacement, and corresponding high fatigue stress, in the vertical outermost fibres of the test specimen 200, one may set a phase shift angle (ϕ) of 0°. With the phase shift angle (ϕ) set at 0°, the short axis of the ellipsoid, corresponding to small displacements and a low fatigue stress, becomes aligned in the horizontal direction (H) and the long axis, corresponding to large displacements and a high fatigue stress, becomes aligned in the vertical direction (V), as is displayed in figure 5b.

When it is, alternatively, desired to have large displacements, and a corresponding high fatigue stress, in the horizontal outermost fibres of the test specimen 200, and to have small displacements, and a corresponding low fatigue stress, in the vertical outermost fibres of the test specimen 200, one may set a phase shift angle (ϕ) of 90°. When the phase shift angle (ϕ) is set at 90°, the long axis of the ellipsoid becomes aligned in the horizontal direction (H) and the short axis of the ellipsoid becomes aligned in the vertical direction (V).

## Claims

1. Test rig (1) for fatigue testing of a test specimen (200), wherein the test rig comprises:
- at least one support (10), configured to support the test specimen,
- a first excitator (20), comprising a connector (21) for connecting the first excitator to a first end (201) of the test specimen and configured to subject the first end of the test specimen to a first forced vibratory load, wherein a direction of the first forced vibratory load extends in a first plane (P1),
- a second excitator (30), comprising a connector (31) for connecting the second excitator to a second end (202) of the test specimen, opposing the first end, and configured to subject the second end of the test specimen to a second forced vibratory load, wherein a direction of the second forced vibratory load extends in a second plane (P2), and wherein the second plane is aligned parallel to the first plane,
wherein the first excitator and the second excitator each comprise an excenter (60), wherein the excenter comprises an eccentric mass (61), which is rotatable around an axis of rotation (RA) in order to generate an eccentric force (F) and wherein each of the excenters is configured to transmit a respective eccentric force onto a respective end of the test specimen in order to subject the test specimen to the forced vibratory loads,
wherein an axis of rotation of the excenter of the first excitator is aligned concentrically with an axis of rotation of the excenter of the second excitator and wherein a longitudinal axis (LA) of the test specimen is adapted to be aligned concentrically with the axes of rotation of the excenters,
**characterized in that** the eccentric mass in the excenter of the first excitator is configured to rotate in a first direction, wherein the eccentric mass in the excenter of the second excitator is configured to rotate in a second direction, and wherein the first direction is opposite to the second direction.

2. Test rig according to claim 1, wherein the weight of the eccentric mass of at least one of the excenters is adaptable in order to adapt the eccentric force that is generated by the respective excenter,
wherein the eccentric mass of at least one of the excenters optionally comprises a chamber, defining an interior, and wherein the interior of the chamber comprises a selective amount of addable or removable weight elements in order to change the weight of the respective eccentric mass.

3. Test rig according to claim 1 or 2, wherein each of the excenters comprises a single eccentric mass.

4. Test rig according to any of the preceding claims, further comprising a control unit, wherein the control unit is configured to control the first excitator and the second excitator in order to set a frequency (f) of the first forced vibratory load (F1) and the second forced vibratory load (F2) and/or to set a phase shift (ϕ) between the first forced vibratory load (F1) and the second forced vibratory load (F2).

5. Testing assembly (100) for fatigue testing of a test specimen, wherein the testing assembly comprises:
- a test rig according to any of the preceding claims, and
- a test specimen,
wherein a first end of the test specimen is connected to a first excitator of the test rig, wherein a second end of the test specimen is connected to a second excitator of the test rig.

6. Testing assembly according to claim 5, wherein at least a portion of the test specimen extends along a longitudinal axis and wherein the first plane and the second plane are perpendicular to the longitudinal axis, such that the first forced vibratory load and the second forced vibratory load are aligned in a radial direction (R) with respect to the longitudinal axis,
wherein the test specimen is, during the fatigue testing, preferably subjected to a transversal wave deformation, having a direction that is in the radial direction with respect to the longitudinal axis,
wherein the at least one support of the test rig is most preferable arranged at a corresponding node (N) of the deformed test specimen and configured to support the test specimen at the respective node.

7. Method for fatigue testing of a test specimen, comprising the steps of:
- supporting a test specimen with at least one support of a test rig of a testing assembly according to any of the claims 5-6,
- subjecting, with the first excitator, the first end of the test specimen to a first forced vibratory load,
- subjecting, with the second excitator, the second end of the test specimen to a second forced vibratory load,
wherein both of the steps of the subjecting are carried out simultaneously.

8. Method according to claim 7, further comprising the steps of:
- controlling a frequency of the first forced vibratory load and/or the second forced vibratory load, and/or
- controlling a phase shift between the first forced vibratory load and the second forced vibratory load.

9. Method according to claim 7 or 8, wherein the first excitator and the second excitator each comprise an excenter, wherein the excenter comprises an eccentric mass, which is rotatable around an axis of rotation in order to generate an eccentric force, wherein each of the excenters is configured to transmit a respective eccentric force onto a respective end of the test specimen in order to subject the test specimen to the forced vibratory loads and wherein the method further comprises the step of:
- adapting the weight of the eccentric mass of at least one of the excenters in order to adapt the eccentric force that is generated by the respective excenter,
wherein the eccentric mass in the excenter of the first excitator preferably rotates in a first direction, wherein the eccentric mass in the excenter of the second excitator preferably rotates in a second direction, and wherein the first direction is opposite to the second direction.

10. Method according to any of the claims 7-9, further comprising the step of determining one or more fatigue properties of the test specimen, for example a normal stress, a shear stress and/or a strain, occurring in the test specimen.

11. Method for designing a fatigue test, comprising the steps of:
- simulating a virtual model of the test specimen,
- determining, on the basis of the virtual model, an Eigen frequency of the test specimen,
- determining, on the basis of the virtual model, and Eigen mode shape of the test specimen,
- simulating a load case for the fatigue testing of the virtual model, wherein the load case comprises subjecting the virtual model to a first forced vibratory load and a second forced vibratory load,
- performing the method for fatigue testing of the test specimen according to any of the claims 7 - 9, on the basis of the simulated load case,
wherein the at least one support of the test rig is arranged at a location in which it supports the test specimen at a node of the determined Eigen mode shape,
wherein the frequency of the first forced vibratory load and the second forced vibratory load is set to be substantially the same as the determined Eigen frequency.

12. Method according to claim 11, wherein the step of the performing of the fatigue testing comprises the determining of the Eigen frequency and corresponding Eigen mode shape of the test specimen,
wherein the frequency of the first forced vibratory load and the second forced vibratory load is preferably set to be in the range between 95% and 99% of the determined Eigen frequency of the test specimen.

## Patentansprüche

1. Prüfstand (1) für Ermüdungsprüfung eines Prüfkörpers (200), wobei der Prüfstand Folgendes umfasst:
- zumindest eine Stütze (10), ausgelegt zum Stützen des Prüfkörpers,
- einen ersten Erreger (20), umfassend einen Verbinder (21) zum Verbinden des ersten Erregers mit einem ersten Ende (201) des Prüfkörpers und dazu ausgelegt, das erste Ende des Prüfkörpers einer ersten erzwungenen Vibrationslast auszusetzen, wobei sich eine Richtung der ersten erzwungenen Vibrationslast in einer ersten Ebene (P1) erstreckt,
- einen zweiten Erreger (30), umfassend einen Verbinder (31) zum Verbinden des zweiten Erregers mit einem zweiten Ende (202) des Prüfkörpers, das dem ersten Ende gegenüberliegt, und dazu ausgelegt, das zweite Ende des Prüfkörpers einer zweiten erzwungenen Vibrationslast auszusetzen, wobei sich eine Richtung der zweiten erzwungenen Vibrationslast in einer zweiten Ebene (P2) erstreckt und wobei die zweite Ebene parallel zur ersten Ebene ausgerichtet ist,
wobei der erste Erreger und der zweite Erreger jeweils einen Exzenter (60) umfassen, wobei der Exzenter eine exzentrische Masse (61) umfasst, die um eine Rotationsachse (RA) rotierbar ist, um eine exzentrische Kraft (F) zu erzeugen, und wobei jeder der Exzenter dazu ausgelegt ist, eine entsprechende exzentrische Kraft auf ein entsprechendes Ende des Prüfkörpers zu übertragen, um den Prüfkörper den erzwungenen Vibrationslasten auszusetzen,
wobei eine Rotationsachse des Exzenters des ersten Erregers konzentrisch mit einer Rotationsachse des Exzenters des zweiten Erregers ausgerichtet ist und wobei eine Längsachse (LA) des Prüfkörpers dazu angepasst ist, konzentrisch mit den Rotationsachsen der Exzenter ausgerichtet zu werden,
**dadurch gekennzeichnet, dass** die exzentrische Masse im Exzenter des ersten Erregers dazu ausgelegt ist, in einer ersten Richtung zu rotieren, wobei die exzentrische Masse im Exzenter des zweiten Erregers dazu ausgelegt ist, in einer zweiten Richtung zu rotieren, und wobei die erste Richtung der zweiten Richtung entgegengesetzt ist.

2. Prüfstand nach Anspruch 1, wobei das Gewicht der exzentrischen Masse von zumindest einem der Exzenter anpassbar ist, um die exzentrische Kraft anzupassen, die durch den entsprechenden Exzenter erzeugt wird,
wobei die exzentrische Masse von zumindest einem der Exzenter optional eine Kammer umfasst, die ein Inneres definiert, und wobei das Innere der Kammer eine selektive Menge von hinzufügbaren oder entfernbaren Gewichtselementen umfasst, um das Gewicht der entsprechenden exzentrischen Masse zu ändern.

3. Prüfstand nach Anspruch 1 oder 2, wobei jeder der Exzenter eine einzelne exzentrische Masse umfasst.

4. Prüfstand nach einem der vorhergehenden Ansprüche, ferner umfassend eine Steuereinheit, wobei die Steuereinheit dazu ausgelegt ist, den ersten Erreger und den zweiten Erreger zu steuern, um eine Frequenz (f) der ersten erzwungenen Vibrationslast (F1) und der zweiten erzwungenen Vibrationslast (F2) einzustellen und/oder eine Phasenverschiebung (φ) zwischen der ersten erzwungenen Vibrationslast (F1) und der zweiten erzwungenen Vibrationslast (F2) einzustellen.

5. Prüfanordnung (100) für Ermüdungsprüfung eines Prüfkörpers, wobei die Prüfanordnung Folgendes umfasst:
- einen Prüfstand nach einem der vorhergehenden Ansprüche, und
- einen Prüfkörper,
wobei ein erstes Ende des Prüfkörpers mit einem ersten Erreger des Prüfstands verbunden ist, wobei ein zweites Ende des Prüfkörpers mit einem zweiten Erreger des Prüfstands verbunden ist.

6. Prüfanordnung nach Anspruch 5, wobei sich zumindest ein Teil des Prüfkörpers entlang einer Längsachse erstreckt und wobei die erste Ebene und die zweite Ebene senkrecht zur Längsachse sind, sodass die erste erzwungene Vibrationslast und die zweite erzwungene Vibrationslast in einer radialen Richtung (R) bezüglich der Längsachse ausgerichtet sind, wobei der Prüfkörper, während der Ermüdungsprüfung, vorzugsweise einer Transversalwellenverformung ausgesetzt ist, die eine Richtung aufweist, die bezüglich der Längsachse in der radialen Richtung ist, wobei die zumindest eine Stütze des Prüfkörpers am ehesten vorzuziehen an einem entsprechenden Knoten (N) des verformten Prüfkörpers angeordnet und dazu ausgelegt ist, den Prüfkörper an dem entsprechenden Knoten zu stützen.

7. Verfahren für Ermüdungsprüfung eines Prüfkörpers, das die folgenden Schritte umfasst:
- Stützen eines Prüfkörpers mit zumindest einer Stütze eines Prüfstands einer Prüfanordnung nach einem der Ansprüche 5 - 6,
- Aussetzen, mit dem ersten Erreger, des ersten Endes des Prüfkörpers einer ersten erzwungenen Vibrationslast,
- Aussetzen, mit dem zweiten Erreger, des zweiten Endes des Prüfkörpers einer zweiten erzwungenen Vibrationslast,
wobei beide Schritte des Aussetzens gleichzeitig ausgeführt werden.

8. Verfahren nach Anspruch 7, das ferner die folgenden Schritte umfasst:
- Steuern einer Frequenz der ersten erzwungenen Vibrationslast und/oder der zweiten erzwungenen Vibrationslast, und/oder
- Steuern einer Phasenverschiebung zwischen der ersten erzwungenen Vibrationslast und der zweiten erzwungenen Vibrationslast.

9. Verfahren nach Anspruch 7 oder 8, wobei der erste Erreger und der zweite Erreger jeweils einen Exzenter umfassen, wobei der Exzenter eine exzentrische Masse umfasst, die um eine Rotationsachse rotierbar ist, um eine exzentrische Kraft zu erzeugen, und wobei jeder der Exzenter dazu ausgelegt ist, eine entsprechende exzentrische Kraft auf ein entsprechendes Ende des Prüfkörpers zu übertragen, um den Prüfkörper den erzwungenen Vibrationslasten auszusetzen, und wobei das Verfahren ferner den folgenden Schritt umfasst:
- Anpassen des Gewichts der exzentrischen Masse von zumindest einem der Exzenter, um die exzentrische Kraft anzupassen, die durch den entsprechenden Exzenter erzeugt wird,
wobei die exzentrische Masse im Exzenter des ersten Erregers vorzugsweise in einer ersten Richtung rotiert, wobei die exzentrische Masse im Exzenter des zweiten Erregers vorzugsweise in einer zweiten Richtung rotiert und wobei die erste Richtung der zweiten Richtung entgegengesetzt ist.

10. Verfahren nach einem der Ansprüche 7 - 9, ferner umfassend den Schritt des Bestimmens einer oder mehrerer Ermüdungseigenschaften des Prüfkörpers, beispielsweise einer normalen Belastung, einer Scherbelastung und/oder Spannung, die im Prüfkörper auftreten.

11. Verfahren zum Ausgestalten einer Ermüdungsprüfung, das die folgenden Schritte umfasst:
- Simulieren eines virtuellen Modells des Prüfkörpers,
- Bestimmen, auf Grundlage des virtuellen Modells, einer Eigenfrequenz des Prüfkörpers,
- Bestimmen, auf Grundlage des virtuellen Modells, einer Eigenmodusform des Prüfkörpers,
- Simulieren eines Belastungsfalls für die Ermüdungsprüfung des virtuellen Modells, wobei der Belastungsfall umfasst, das virtuelle Modell einer ersten erzwungenen Vibrationslast und einer zweiten erzwungenen Vibrationslast auszusetzen,
- Durchführen des Verfahrens für Ermüdungsprüfung des Prüfkörpers nach einem der Ansprüche 7 - 9, auf Grundlage des simulierten Belastungsfalls,
wobei die zumindest eine Stütze des Prüfstands an einem Ort angeordnet ist, in dem sie den Prüfkörper an einem Knoten der bestimmten Eigenmodusform stützt,
wobei die Frequenzen der ersten erzwungenen Vibrationslast und der zweiten erzwungenen Vibrationslast so eingestellt werden, dass sie im Wesentlichen gleich der bestimmten Eigenfrequenz sind.

12. Verfahren nach Anspruch 11, wobei der Schritt des Durchführens der Ermüdungsprüfung das Bestimmen der Eigenfrequenz und der entsprechenden Eigenmodusform des Prüfkörpers umfasst,
wobei die Frequenzen der ersten erzwungenen Vibrationslast und der zweiten erzwungenen Vibrationslast vorzugsweise so eingestellt werden, dass sie im Bereich zwischen 95 % und 99 % der bestimmten Eigenfrequenz des Prüfkörpers sind.

## Revendications

1. Banc d'essai (1) pour réalisation d'essais de fatigue sur une éprouvette (200), dans lequel le banc d'essai comprend :
- au moins un support (10), configuré pour supporter l'éprouvette,
- un premier excitateur (20), comprenant un raccord (21) pour raccorder le premier excitateur à une première extrémité (201) de l'éprouvette et configuré pour soumettre la première extrémité de l'éprouvette à une première charge vibratoire forcée, dans lequel une direction de la première charge vibratoire forcée s'étend dans un premier plan (P1),
- un second excitateur (30), comprenant un raccord (31) pour raccorder le second excitateur à une seconde extrémité (202) de l'éprouvette, opposée à la première extrémité, et configuré pour soumettre la seconde extrémité de l'éprouvette à une seconde charge vibratoire forcée, dans lequel une direction de la seconde charge vibratoire forcée s'étend dans un second plan (P2), et dans lequel le second plan est aligné parallèlement au premier plan,
dans lequel le premier excitateur et le second excitateur comprennent chacun un excentrique (60), dans lequel l'excentrique comprend une masse excentrique (61), qui est rotative autour d'un axe de rotation (RA) afin de générer une force excentrique (F) et dans lequel chacun des excentriques est configuré pour transmettre une force excentrique respective sur une extrémité respective de l'éprouvette afin de soumettre l'éprouvette aux charges vibratoires forcées,
dans lequel un axe de rotation de l'excentrique du premier excitateur est aligné concentriquement avec un axe de rotation de l'excentrique du second excitateur et dans lequel un axe longitudinal (LA) de l'éprouvette est adapté pour être aligné concentriquement avec les axes de rotation des excentriques, **caractérisé en ce que** la masse excentrique dans l'excentrique du premier excitateur est configurée pour entrer en rotation dans une première direction, dans lequel la masse excentrique dans l'excentrique du second excitateur est configurée pour entrer en rotation dans une seconde direction, et dans lequel la première direction est opposée à la seconde direction.

2. Banc d'essai selon la revendication 1, dans lequel le poids de la masse excentrique d'au moins un des excentriques est adaptable afin d'adapter la force excentrique qui est générée par l'excentrique respectif,
dans lequel la masse excentrique d'au moins un des excentriques comprend optionnellement une chambre, définissant un intérieur, et dans lequel l'intérieur de la chambre comprend une quantité sélective d'éléments de poids ajoutables ou enlevables afin de changer le poids de la masse excentrique respective.

3. Banc d'essai selon la revendication 1 ou 2, dans lequel chacun des excentriques comprend une seule masse excentrique.

4. Banc d'essai selon l'une quelconque des revendications précédentes, comprenant en outre une unité de commande, dans lequel l'unité de commande est configurée pour commander le premier excitateur et le second excitateur afin de régler une fréquence (f) de la première charge vibratoire forcée (F1) et de la seconde charge vibratoire forcée (F2) et/ou de régler un déphasage (ϕ) entre la première charge vibratoire forcée (F1) et la seconde charge vibratoire forcée (F2).

5. Ensemble de réalisation d'essais (100) pour réalisation d'essais de fatigue sur une éprouvette, dans lequel l'ensemble de réalisation d'essais comprend :
- un banc d'essai selon l'une quelconque des revendications précédentes, et
- une éprouvette,
dans lequel une première extrémité de l'éprouvette est raccordée à un premier excitateur du banc d'essai, dans lequel une seconde extrémité de l'éprouvette est raccordée à un second excitateur du banc d'essai.

6. Ensemble de réalisation d'essais selon la revendication 5, dans lequel au moins une partie de l'éprouvette s'étend le long d'un axe longitudinal et dans lequel le premier plan et le second plan sont perpendiculaires à l'axe longitudinal, de telle sorte que la première charge vibratoire forcée et la seconde charge vibratoire forcée soient alignées dans une direction radiale (R) par rapport à l'axe longitudinal,
dans lequel l'éprouvette est, durant la réalisation d'essais de fatigue, de préférence soumise à une déformation ondulée transversale, ayant une direction qui est dans la direction radiale par rapport à l'axe longitudinal,
dans lequel l'au moins un support du banc d'essai est de façon la plus préférable agencé à un noeud correspondant (N) de l'éprouvette déformée et configuré pour supporter l'éprouvette au noeud respectif.

7. Procédé pour réalisation d'essais de fatigue sur une éprouvette, comprenant les étapes consistant à :
- supporter une éprouvette avec au moins un support d'un banc d'essai d'un ensemble de réalisation d'essais selon l'une quelconque des revendications 5 et 6,
- soumettre, avec le premier excitateur, la première extrémité de l'éprouvette à une première charge vibratoire forcée,
- soumettre, avec le second excitateur, la seconde extrémité de l'éprouvette à une seconde charge vibratoire forcée,
dans lequel les deux des étapes consistant à soumettre sont effectuées simultanément.

8. Procédé selon la revendication 7, comprenant en outre les étapes consistant à :
- commander une fréquence de la première charge vibratoire forcée et/ou de la seconde charge vibratoire forcée, et/ou
- commander un déphasage entre la première charge vibratoire forcée et la seconde charge vibratoire forcée.

9. Procédé selon la revendication 7 ou 8, dans lequel le premier excitateur et le second excitateur comprennent chacun un excentrique, dans lequel l'excentrique comprend une masse excentrique, qui est rotative autour d'un axe de rotation afin de générer une force excentrique, dans lequel chacun des excentriques est configuré pour transmettre une force excentrique respective sur une extrémité respective de l'éprouvette afin de soumettre l'éprouvette aux charges vibratoires forcées et dans lequel le procédé comprend en outre l'étape consistant à :
- adapter le poids de la masse excentrique d'au moins un des excentriques afin d'adapter la force excentrique qui est générée par l'excentrique respectif,
dans lequel la masse excentrique dans l'excentrique du premier excitateur entre de préférence en rotation dans une première direction, dans lequel la masse excentrique dans l'excentrique du second excitateur entre de préférence en rotation dans une seconde direction, et dans lequel la première direction est opposée à la seconde direction.

10. Procédé selon l'une quelconque des revendications 7 à 9, comprenant en outre l'étape consistant à déterminer une ou plusieurs propriétés de fatigue de l'éprouvette, par exemple une contrainte normale, une contrainte de cisaillement et/ou une déformation, se produisant dans l'éprouvette.

11. Procédé pour concevoir un essai de fatigue, comprenant les étapes consistant à :
- simuler un modèle virtuel de l'éprouvette,
- déterminer, sur la base du modèle virtuel, une fréquence propre de l'éprouvette,
- déterminer, sur la base du modèle virtuel, et forme de mode propre de l'éprouvette,
- simuler un cas de charge pour la réalisation d'essais de fatigue du modèle virtuel, dans lequel le cas de charge comprend le fait de soumettre le modèle virtuel à une première charge vibratoire forcée et une seconde charge vibratoire forcée,
- effectuer le procédé pour réalisation d'essais de fatigue sur l'éprouvette selon l'une quelconque des revendications 7 à 9, sur la base du cas de charge simulé,
dans lequel l'au moins un support du banc d'essai est agencé à un emplacement dans lequel il supporte l'éprouvette à un noeud de la forme de mode propre déterminée,
dans lequel la fréquence de la première charge vibratoire forcée et de la seconde charge vibratoire forcée est réglée pour être sensiblement la même que la fréquence propre déterminée.

12. Procédé selon la revendication 11, dans lequel l'étape consistant à effectuer la réalisation d'essais de fatigue comprend le fait de déterminer la fréquence propre et une forme de mode propre correspondante de l'éprouvette,
dans lequel la fréquence de la première charge vibratoire forcée et de la seconde charge vibratoire forcée est de préférence réglée pour être dans la plage entre 95 % et 99 % de la fréquence propre déterminée de l'éprouvette.
